(19) **Europäisches Patentamt / European Patent Office / Office européen des brevets**

(11) **EP 2 731 213 B1**

(12) **EUROPEAN PATENT SPECIFICATION**

(45) Date of publication and mention of the grant of the patent:
**03.02.2016 Bulletin 2016/05**

(51) Int Cl.:
*H02B 13/035* (2006.01)    *H01T 2/02* (2006.01)
*H02H 9/00* (2006.01)    *H01H 31/32* (2006.01)
*H01H 33/59* (2006.01)

(21) Application number: **12460079.2**

(22) Date of filing: **12.11.2012**

(54) **A method for controlling arc ignition in the intercontact break of a disconnector during the operation of opening and closing the disconnector**

Verfahren zum Steuern der Lichtbogenzündung zwischen den Kontakten eines Trenners während dem Öffnen und Schließen des Trenners

Procédé de commande d'allumage de l'arc dans la zone inter-contact d'un sectionneur pendant l'opération d'ouverture et de fermeture du sectionneur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.05.2014 Bulletin 2014/20**

(73) Proprietor: **ABB Technology AG**
**8050 Zürich (CH)**

(72) Inventors:
- **Szewczyk, Marcin**
  **03-982 Warszawa (PL)**
- **Stosur, Mariusz**
  **58-130 Imbramowice (PL)**
- **Piasecki, Wojciech**
  **30-009 Krakow (PL)**
- **Riechert, Uwe**
  **8192 Glattfelden (CH)**
- **Kostovic, Jadran**
  **5430 Wettingen (CH)**

(74) Representative: **Chochorowska-Winiarska, Krystyna**
**ABB Sp. z o. o.**
**ul. Zeganska 1**
**04-713 Warszawa (PL)**

(56) References cited:
**WO-A1-99/67857    JP-A- 2000 067 705**

EP 2 731 213 B1

## Description

The invention deals with a method and device for controlling the ignition of electric arc in the intercontact break of a disconnector during the operation of opening and closing the disconnector used in a gas-insulated switchgear (GIS).

## PRIOR ART

In SF6 gas insulated switchgear there occur breakdowns of the intercontact break during opening and closing of switching apparatuses. These overvoltages are of special significance for the operation of a disconnector. Every breakdown results in the occurrence of an overvoltage propagating along the switchgear busbars and causing stresses in equipment insulation and the risk of its breakdown. Therefore various methods are used for reducing the value of the amplitude of overvoltages generated as a result of a GIS disconnector operation.

Patent No. JP6342618 describes a disconnector which is provided with an additional resistor located so that arc current generated by arc ignition flows through the resistor, which causes that the energy of the arc is lost on the resistor in the thermal way.

Patent No. CN1258923 reveals a method for suppressing high-frequency overvoltages, which employs rings made of a magnetic material, located around the conductor of the GIS busduct, in which energy associated with the propagating overvoltage wave is lost and thereby the amplitude of the overvoltage wave is reduced.

Patent description DE3216275 describes a device in which on the external surface of the conductor of the GIS busduct there is located a resistive-magnetic material in which energy connected with propagating overvoltage wave is lost and thereby the amplitude of the overvoltage wave is reduced.

Patent description EP09156418 describes a method and device for reducing the value of the overvoltage amplitude, in the form of resonators, wherein suitably shaped metal elements have the ability to store energy in magnetic and electric fields in a way that shows resonance for characteristic frequencies, in which resonance the energy of the propagating overvoltage wave is lost.

Patent description JP2000067705 describes a gas insulated disconnecting switch having a metallic tank filled with an insulating gas. A laser generator is disposed on the outside of the metallic tank. A laser beam radiated from the laser generator is introduced into the metallic tank through a transmission window and furthermore the laser beam introduced into a conductor through a slit is condensed between electrodes of the disconnecting switch by a reflector and focusing lens. The method of controlling the ignition of electric arc in the intercontac break of the disconnector switch used in a gas-insulated switchgear during opening/closing the disconnector switch includes the supply of pulses of electromagnetic radiation energy for triggering additional ignition of electric arc. In this method during the operation of opening of the disconnector the time of the opening operation is measured. During the operation of closing the disconnector the time of the closing operation is measured.

The presented solutions do not apply to the way in which the conditions of occurrence of arc ignition in the intercontact break of the disconnector during the operation of opening or closing the disconnector are affected in order to reduce the amplitude of overvoltages travelling along the switchgear busducts. An overvoltage amplitude is directly proportional to the potential difference between the contacts of the disconnector at the moment directly preceding arc ignition in the intercontact break (breakdown of the intercontact break) and it represents so called intercontact voltage at the moment directly preceding arc ignition. The value of the intercontact voltage at the moment directly preceding arc ignition depends on the course of the operation of opening or closing the disconnector, and in particular on the time moment or the intercontact distance and on instantaneous values of voltages occurring on both sides of the disconnector.

Patent description WO99/67857 describes a switching device that can be used for igniting the arc in the intercontact break of the device. The device comprises a unit for supplying electromagnetic radiation energy to the intercontact break to cause formation of plasma in the intercontact break, which plasma has the nature of ionized gas and leads to ignition of electric arc in the intercontact break. Supply of energy to the intercontact break, for example by means of a laser beam, causes a change in the value of intercontact voltage at which arc ignitions occur, and thereby it changes the amplitude of the emerging overvoltages. However, this solution does not include a method for controlling the ignition of the electric arc in the intercontact break.

## THE ESSENCE OF THE INVENTION

The essence of the method for controlling the ignition of electric arc in the intercontact break of a disconnector used in gas-insulated switchgear, during the operation of opening and closing of the disconnector, including the supply of pulses of electromagnetic radiation energy for causing additional ignitions of electric arc, using means for generating an electromagnetic radiation adapted to supply electromagnetic radiation energy pulses to the intercontact break of the disconnector, which is connected with an optical system, located outside and inside the disconnector, where in the method the time (t) of the operation of opening/closing the disconnector is measured, is that:

a) during the operation of opening the disconnector:

- the voltage waveform uS(t) on the incoming side of the disconnector are measured,

- instantaneous voltage values uS(t) on the incoming side of the disconnector are compared with a preset threshold constant value (U1), and if the condition is fulfilled first time that the instantaneous value of voltage uS(t) is equal to the threshold constant value (U1), the first additional energy pulse is supplied to the intercontact break, and then if the condition is fulfilled that the instantaneous value of voltage uS(t) is equal to the threshold constant value (U1), then next subsequent energy pulses are supplied, which continue to be supplied until the real time (t) of the operation of opening the disconnector becomes equal or exceeds a boundary time value preset by the user (T1), for which value the distance between the contacts reaches a value for which further spontaneous ignitions are not possible for the given design of disconnector
  or

- voltage waveforms uS(t) on the incoming side of the disconnector as well as voltage waveforms uL(t) on the load side of the disconnector are measured,

- a instantaneous voltage value A(t) is calculated and compared with a preset boundary constant value (U2), and if the instantaneous voltage value A(t) reaches a value equal to or bigger than the threshold constant value (U2), the first additional energy pulse is supplied to the intercontact break, and then if the instantaneous value of voltage A(t) reaches a value equal to or bigger than the threshold constant value (U2) next subsequent energy pulses are supplied, which continue to be supplied until the real time (t) of the operation of opening the disconnector becomes equal to or exceeds a boundary time value preset by the user (T3), for which the distance between the contacts reaches a value for which further spontaneous ignitions are not possible for the given disconnector design,

b) during the operation of closing the disconnector:

- the voltage waveform uS(t) on the incoming side of the disconnector are measured,

- the instantaneous value of voltage uS(t) on the incoming side of the disconnector is compared with a preset threshold constant value (U1) and if the conditions are fulfilled that the instantaneous value of voltage uS(t) is equal to the threshold constant value (U1) and the real time of closing the disconnector is equal to or bigger a boundary time value preset by the user (T2), the first additional energy pulse is supplied to the intercontact break, and then if the conditions are fulfilled that the instantaneous value uS(t) is equal to the threshold constant value ($U_1$) and that the real time of closing the disconnector is equal to or bigger a boundary time value preset by the user (T2), next subsequent energy pulses are supplied, and they are supplied until the disconnector closes completely,

or

- voltage waveforms uS(t) on the incoming side of the disconnector and voltage waveforms uL(t) on the load side of the disconnector are measured,
- the instantaneous value of voltage A(t) is calculated and compared with a preset boundary constant value (U2), and if the instantaneous value of voltage A(t) reaches a value equal to or bigger than the threshold constant value (U2) and the real time of closing the disconnector exceeds a time boundary value preset by the user (T4), the first additional energy pulse is supplied to the intercontact break, and then if the instantaneous value of voltage A(t) reaches a value equal to or bigger than a threshold value (U2) and the real time of closing the disconnector is equal to or bigger the time boundary value (T4) preset by the user, next subsequent energy pulses are supplied, and they are supplied until the disconnector closes completely.

Preferably, the instantaneous value of voltage A(t) is calculated from this formula:

$$A(t) = |uS(t) - uL(t)| + |uS(t)|,$$

or

$$A(t) = |uS(t) - uL(t)|,$$

where:

uS(t) is the instantaneous value of voltage waveform measured on the incoming side of the disconnector,
uL(t) is the instantaneous value of voltage waveform measured on the load side of the disconnector.

The essence of the device for controlling electric arc ignition in the intercontact break of a disconnector used in gas-insulated switchgear, during opening/closing the disconnector, comprising an energy source adapted to supplying electromagnetic radiation energy pulses to the intercontact break of the disconnector, which is connected with an optical system located outside and/or inside the disconnector, is that the energy source is electrically connected with a control system in the form of a computer device whose processor contains a measuring module electrically connected with a sensor measuring the voltage waveform on the incoming side of the disconnector and with a sensor measuring the voltage waveform on the load side, a module for processing and storing the measured signals, a module adapted to generating and transferring trigger signals transferred to the source of energy supply. The control system is configured to perform the method of claims from 1 to 3.
Preferably, the source of electromagnetic radiation energy is adapted to supplying a laser beam to the inter-contact break.
Alternatively, the source of electromagnetic radiation energy is adapted to supplying a microwave radiation energy pulse to the intercontact break.

## ADVANTAGES

An advantage of the invention is a reduction in the value of overvoltages that occur in the disconnector and propagate outside the disconnector, and that have been generated in the course of opening and/or closing the disconnector, and thereby a reduction in the harmful effect of that phenomenon on equipment insulation, a reduction in the risk of breakdown of equipment insulation, enabling selection of a lower level of equipment insulation, or enabling smaller insulating clearances in equipment. An advantage of the invention is the achievement of a reduction in the value of overvoltages in the place where they form. Application of the inventive method, by changing the conditions of formation of overvoltages, allows to achieve a reduction in the value of overvoltages. The conditions of overvoltage formation are determined by instantaneous values of voltages occurring on both sides of the disconnector contact system at the moment directly preceding the ignition of electric arc in the intercontact break of the disconnector. The conditions of overvoltage formation are modified by causing additional arch ignitions in the intercontact break of the disconnector during the operation of opening the disconnector and/or operation of closing the disconnector, in such preferred way, that an overvoltage formed as a result of electric arc ignition does not exceed the preferred value permissible for a given operation of the disconnector.

## EMBODIMENT EXAMPLE

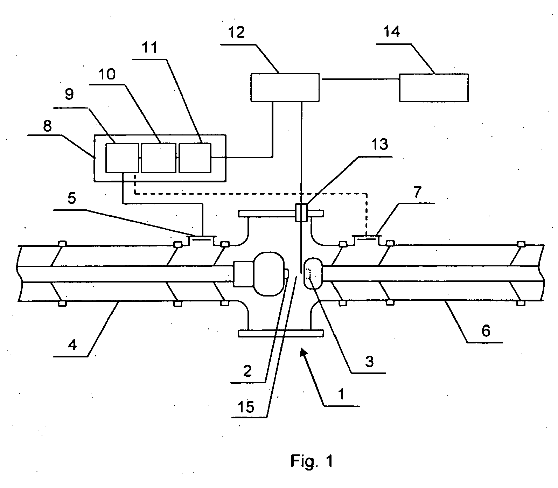

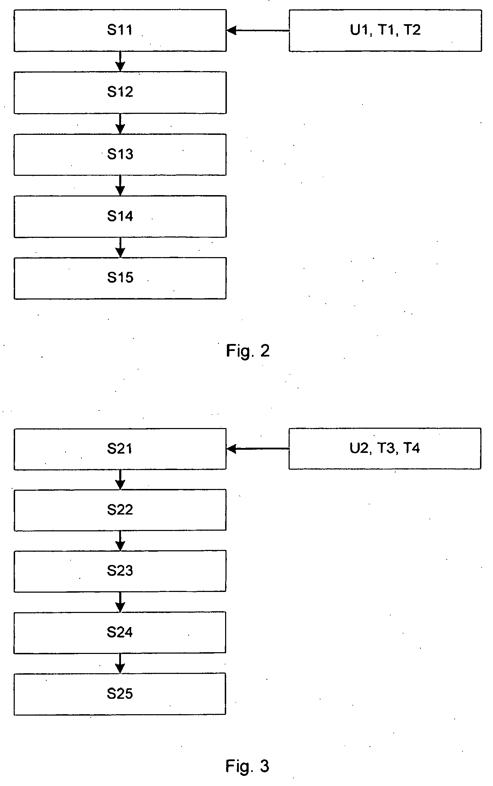

The method according to the invention is presented as an embodiment in the drawing where fig. 1 shows schematically the system for the implementation of the invention, fig. 2 shows the sequence of actions performed to implement the method for the operation of opening/closing the disconnector in the first version of the invention embodiment, fig. 3 shows the sequence of actions performed to implement the method for the operation of opening/closing the disconnector in the second version of the invention embodiment, fig. 4 shows the diagrams of voltage waveforms during the operation of opening the disconnector in the first version of the invention embodiment, fig. 5 shows the diagrams of voltage waveforms during the operation of closing the disconnector in the first version of the invention embodiment, fig. 6 shows the diagrams of voltage waveforms during the operation of opening the disconnector in the second version of the invention embodiment, fig. 7 shows the diagrams of voltage waveforms during the operation of closing the disconnector in the second version of the invention embodiment.
The method according to the invention is realized in two embodiment versions. A disconnector 1, preferably of the gas-insulated switchgear type, comprises a moving contact 2 and a stationary contact 3. The moving contact 2 is located in the disconnector 1 on the side of the incoming busduct 4 of a working voltage 1100 kV of a working frequency 50 or 60 Hz, measured by the first sensor 5 connected to the busduct 4. The busduct 4 is located on the side of the high-voltage alternating current source. The stationary contact 3 is located in the disconnector 1 on the side of the busduct 6 connected with an open switch, not shown in the drawing, of a voltage on the load side uL(t), measured by the second sensor 7. The sensor 5 is electrically connected with a control system 8. The sensor 7 is connected to the busduct 6 and it is electrically connected with the control system 8, which is indicated by dashed line in fig. 1. The control system 8 is a computer device whose processor comprises a measuring module 9, a module for processing electric signals 10, and a module adapted to supplying an electric trigger signal 11, which module is connected with a source of electromagnetic radiation energy 12. The source of electromagnetic radiation energy 12 is adapted to supplying an electromagnetic radiation energy pulse to the intercontact break 15 of the disconnector, i.e. to the space between the moving contact 2 and the stationary contact 3. The energy source is connected with an optical system 13 located outside and inside the disconnector, which is schematically indicated in fig. 1. The source of electromagnetic radiation energy 12 is supplied from a supply system 14 and it is adapted to generating electromagnetic radiation energy pulses in the form of laser or microwave beams. In the example of the device embodiment, the energy of electromagnetic radiation pulses employed to trigger off arc ignition in the intercontact break 15 of the disconnector 1 is generated in the source of laser radiation. A laser beam is introduced into the space of the intercontact break 15 using the optical system 13 consisting of a system of mirrors and a sight-glass, which is not shown in the drawing. The source of electromagnetic radiation energy 12 is controlled by means of a control system 8 connected to the voltage sensors 5 for the first version, or 5 and 7 for the second version. The sensors 5 and 7 are located on both sides of the disconnector in a way permitting voltage measurement on both sides of the disconnector.

The method according to the invention is realized during closing/opening the disconnector in the arrangement presented in fig.1. For opening, it is carried out according to one of two versions of opening the disconnector. For closing, the method is carried out according to one of two versions of closing the disconnector. The first version of opening the disconnector allows to reduce the value of overvoltages so that their maximum value will not exceed approximately a value of 2 p.u., where p.u. means the amplitude of the working phase voltage. The second version of opening the disconnector allows to reduce the value of overvoltages so that their maximum value will not exceed the preset value, approximately 1.3 p.u., where p.u. means the amplitude of the working phase voltage. Similarly, the first version of closing the disconnector allows to reduce the value of overvoltages so that their maximum value will not exceed approximately a value of 2 p.u., where p.u. means the amplitude of the working phase voltage. The second version of closing the disconnector allows to reduce the value of overvoltages so that their maximum value will not exceed the preset value, approximately 1.3 p.u., where p.u. means the amplitude of the working phase voltage. Any of the two versions of implementation of the invention during opening the disconnector can be connected with any version of implementation of the invention during closing the disconnector.

An example of the invention implementation process is presented in the following steps for the first version and for the second version of the invention, respectively.

**An embodiment of the control method for the operation of opening/closing the disconnector for the first version is presented in steps S11-S15.**

**Step S11: Data supply**

In step S11, the user enters constant data to a computer control system 8 connected to a disconnector 1, with the disconnector closed for the operation of opening the disconnector, and with the disconnector open for the operation of closing the disconnector. Constant data include the threshold voltage value U1, a value approximately equal to zero, for example 0.01 p.u., where p.u. means the amplitude of the working phase voltage, and the boundary values of times T1 for the operation of opening the disconnector and T2 for the operation of closing the disconnector, after which spontaneous ignitions cannot occur for the operation of opening the disconnector, and spontaneous arc ignitions can occur for the closing operation between the disconnector contacts. The constant data U1, T1, T2 are characteristic for a given type of disconnector and for assumed requirements relating to the course of the operation of opening the disconnector or the process of closing the disconnector. The constant data are stored in the signal processing module 10.

**Step S12:**

**Measurement of voltages and comparison of voltage values with threshold values**

In step S12 of the invention, the activation of the operation of opening or closing the disconnector starts, at moment t10 equal to zero for the operation of opening the disconnector, and at moment t20 equal to zero for the process of closing the disconnector, respectively, and the instantaneous value of real time t of the operation of opening/closing the disconnector is measured. Instead of the instantaneous value of real time t the distance between the contacts can be measured, which does not change the essence of the invention and is not shown in the drawing. After the activation of the operation of opening/closing the disconnector, starts the real-time t measurement of the instantaneous voltage value uS(t) measured on the incoming side of the disconnector. The measured data are entered into the computer control system 8. Next, on the basis of the measured data and the constant data entered in step S11, the instantaneous voltage values uS(t) are compared with the constant piece of data U1, and the fact that the value U1 has been exceeded by the instantaneous voltage value uS(t) is detected in real time t, i.e. if:

$$uS(t) = U1. \hspace{4cm} (1)$$

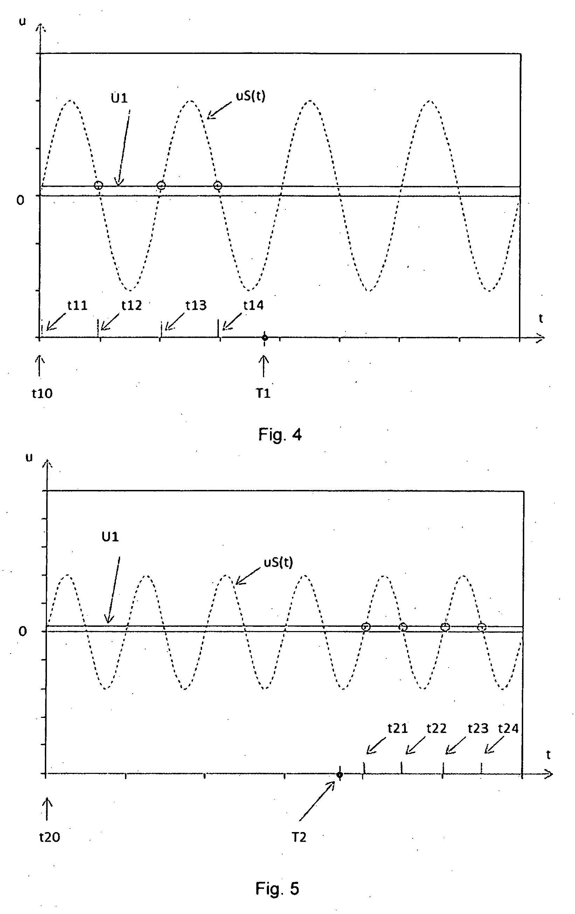

The moments of exceeding, defined by the formula (1), are indicated for the operation of opening the disconnector in fig. 4 as t11, t12, t13, t14, and for the operation of closing the disconnector in fig. 5 as t21, t22, t23, t24.

**Step S13:**

**Introduction of ignitions**

Electric arc ignitions occurring between the contacts of a disconnector result in overvoltages which propagate on both sides of the disconnector.

To reduce the maximum values of overvoltages generated as a result of arc ignitions and thereby to limit the harmful effects of that phenomenon, in step S13, after the detection of time moments t11, t12, t13, t14 for the operation of opening the disconnector, and t21, t22, t23, t24 for the operation of closing the disconnector, electric signals of releasing electromagnetic radiation energy are sent from a module 11 to a device which is a source of electromagnetic radiation energy 12, and an electromagnetic radiation energy pulse is delivered from the external source of electromagnetic radiation energy 12 to the intercontact break, which causes the formation of the first controlled additional electric arc ignition, at a moment t11 for the operation of opening the disconnector and at a moment t21 for the operation of closing the disconnector. The additional pulse is independent of spontaneous ignitions occurring during the operation of opening/closing the disconnector. Successive additional ignitions are introduced independently of spontaneous ignitions occurring during the operation of opening/closing the disconnector, always after making a comparison with the boundary value U1 in a way as in step S12.

**Step S14:**

**Comparison of time t with boundary values**

In step S14, the measured instantaneous real time value t is compared with the preset boundary value T1 for the operation of opening the disconnector and with the preset boundary value T2 for the operation of closing the disconnector. Depending on the design of the disconnector and its operating conditions, the times T1 and T2 may, for example, be identical and equal to 0.25 s. When, for the operation of opening the disconnector, the instantaneous real time value t is less than the preset boundary value T1 then the operation of opening the disconnector is continued while introducing subsequent additional ignitions according to the description in steps S12 and S13, until the moment when the instantaneous real time value t is bigger than or equal to the value T1 in which moment triggering of additional ignitions is stopped for the operation of opening the disconnector and the operation of opening the disconnector is continued in step S15 until the disconnector is fully open. For the operation of closing the disconnector, when the instantaneous real time value t is bigger than or equal to the preset boundary value T2, then introduction of additional ignitions starts according to the description in steps S12 and S13, and the closing process is continued in step S15 until the disconnector is fully closed.

**Step S15:**

**The operation of opening/closing the disconnector is continued**

In step S15, opening or closing the disconnector is continued until it is fully open or closed.

**An embodiment of the control method for the operation of opening/closing the disconnector for the second version of the invention is presented in steps S21-S25.**

**Step S21: Data supply**

In step S11. the user enters constant data to a computer control system 8 connected to a disconnector 1, with the disconnector closed for the operation of opening the disconnector, and with the disconnector open for the operation of closing the disconnector. Constant data include the threshold value of voltage U2, and the boundary values of times T3 for the operation of opening the disconnector and T4 for the operation of closing the disconnector, after which spontaneous ignitions cannot occur for the operation of opening the disconnector, and for the closing operation spontaneous ignitions of electric arc may occur between the disconnector contacts. The times T3 and T4 correspond to the distances 2, 3 between the disconnector contacts. The constant data U2, T3, T4 are characteristic of a given type of disconnector and of assumed requirements relating to the course of the operation of opening the disconnector or the process of closing the disconnector. The constant data are stored in the signal processing module 10.

**Step S22:**

**Measurement of voltages and comparison of voltage values with threshold values**

In step S22 of the invention, the activation of the operation of opening the disconnector or of the operation of closing the disconnector starts, at a moment t30 equal to zero for the operation of opening the disconnector, and at a moment t40 equal to zero for the process of closing the disconnector, respectively, and the instantaneous value of real time t of the operation of opening/closing the disconnector is measured. Instead of the instantaneous value of real time t the distance between the contacts can be measured, which does not change the essence of the invention and is not shown in the drawing. After the activation of the operation of opening/closing the disconnector, starts the real-time t measurement of the instantaneous voltage value uS(t) measured on the incoming side of the disconnector and of the instantaneous value uL(t) measured on the load side of the disconnector, i.e. on the side of the busduct 6 open at the end. The measured data are entered into the computer control system 8. Next, on the basis of the measured data and the constant data entered in step S21, the instantaneous voltage value A(t) is calculated in real time t as the absolute value of the difference between the instantaneous values of voltages uS(t) and uL(t) increased by the absolute value of the instantaneous voltage value uS(t), which is expressed by this formula:

$$A(t) = |uS(t) - uL(t)| + |uS(t)| \qquad\qquad (2)$$

or

the instantaneous voltage value A(t) is calculated in real time as the absolute value of the difference between the instantaneous values of voltages uS(t) and uL(t), which is expressed by this formula:

$$A(t) = |uS(t) - uL(t)| \qquad\qquad (3)$$

Next, on the basis of the measured data and the constant data entered in step S21, the instantaneous voltage values A(t) are compared with the value of the constant U2, for example 1.3 p.u. for (2) and 0.3 p.u. for (3), where p.u. means the amplitude of the working phase voltage. The fact that the value U2 has been exceeded by the instantaneous voltage values A(t) is detected in real time t, i.e. if:

$$A(t) = U2. \qquad\qquad (4)$$

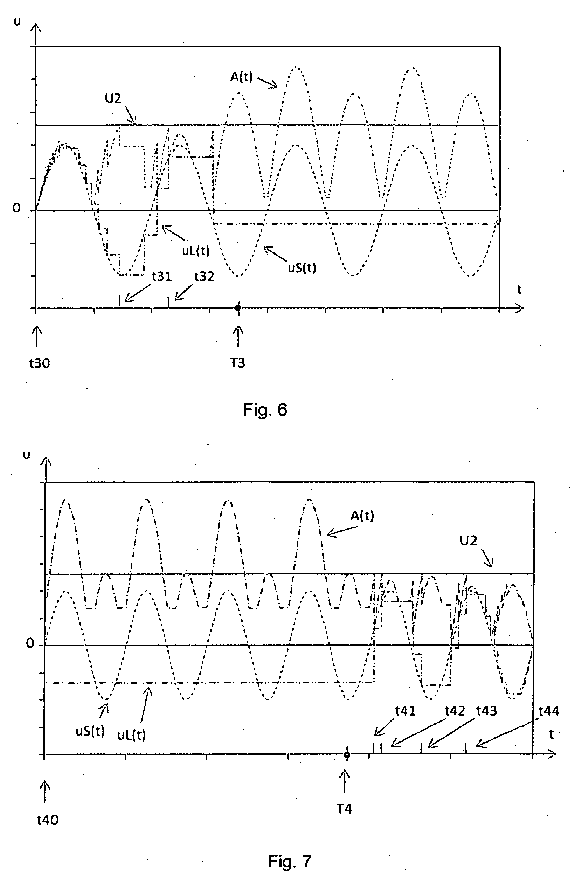

The moments of exceeding, defined by the formula (4) are indicated for the operation of opening the disconnector in fig. 6 as t31, t32, and for the operation of closing the disconnector in fig. 7 as t41, t42, t43, t44.

**Step S23:**

**Introduction of ignitions**

Electric arc ignitions occurring between the contacts of a disconnector result in overvoltages which propagate on both sides of the disconnector.
To reduce the maximum values of overvoltages generated as a result of arc ignitions and thereby to limit the harmful effects of that phenomenon, in step S23, after the detection of time moments t31, t32 for the operation of opening the disconnector and t41, t42, t43, t44 for the operation of closing the disconnector, electric signals of releasing electromagnetic radiation energy are sent from a module 11 to a device which is a source of electromagnetic radiation energy 12, and an electromagnetic radiation energy pulse is delivered from the external source of electromagnetic radiation energy 12 to the intercontact break, which causes the formation of the first controlled additional electric arc ignition, at a moment t31 for the operation of opening the disconnector and at a moment t41 for the operation of closing the disconnector. The additional pulse is independent of spontaneous ignitions occurring during the operation of opening/closing the disconnector, and it causes a modification in the voltage waveform uL(t) measured on the load side of the disconnector, so that the instantaneous voltage value uL(t) becomes approximately equal to the instantaneous voltage value uS(t). Successive additional ignitions are introduced independently of spontaneous ignitions occurring during the operation of opening/closing the disconnector, always after making a comparison with the boundary valueU2 in a way as in step S22.

**Step S24:**

**Comparison of time t with boundary values**

In step S24, the measured instantaneous real time value t is compared with the preset boundary value T3 for the operation of opening the disconnector and with the preset boundary value T4 for the closing operation. Depending on the design of the disconnector and its operating conditions, the times T3 and T4 may, for example, be identical and equal to 0.25 s. When, for the operation of opening the disconnector, the instantaneous real time value t is less than the preset boundary value T3 then the operation of opening the disconnector is continued while introducing subsequent additional ignitions according to the description in steps S22 and S23, until the instantaneous real time value t is bigger than or equal to the value T3 in which triggering of additional ignitions is stopped for the operation of opening the disconnector and the operation of opening the disconnector is continued in step S25 until the disconnector is fully open.

For the operation of closing the disconnector the process of closing the disconnector is executed until the instantaneous real time value t is bigger than or equal to the preset boundary value T4, and then introduction of additional ignitions starts according to the description in steps S22 and S23, and the closing process is continued in step S25 until the disconnector is fully closed.

As soon as the boundary value T3 or T4 has been exceeded, for the operation of opening the disconnector, triggering of subsequent additional electric arc ignitions is stopped at the moment T3, and for closing, triggering of subsequent additional electric arc ignitions is started at the moment T4, and the operation of opening the disconnector or the operation of closing the disconnector in step S25 is continued until the disconnector is fully open or fully closed.

**Step S25:**

**The operation of opening/closing the disconnector is continued**

In step S25 opening or closing the disconnector is continued until it is fully open or closed.

**An example of disconnector design parameters and constant data values**

In operating conditions, the invention is realized for a disconnector in SF6 gas insulation of rated parameters determined by Rated Voltage of 1100 kV and Rated Power Frequency Withstand Voltage of 1100 kV. The speed of the moving contact is the same for the operation of opening the disconnector and for the operation of closing the disconnector and it is 1 m/s (contact speed). The distance between the contacts at full opening of the contacts is 0.5 m. The real time t of the contact movement, measured from the position of full closing/opening of the disconnector, for the operation of opening/closing the disconnector, is respectively 0.5 s according to the formula: 0.5 m / 1 m/s = 0.5 s. The interrelation between the voltage determining the breakdown voltage of the intercontact break and the intercontact distance is a linear dependence. The movement of the disconnector contact is a uniform motion, which means that the dependence of the time of opening/closing the disconnector on the intercontact distance is a linear dependence. At the moment of full opening of the contacts, that is after 0.5 s from the moment of start of the contact movement, the withstand voltage of the intercontact break reaches the Rated Power Frequency Withstand Voltage, i.e. 1100 kV. For the above described design features of the disconnector, for the implementation of the invention, the following have been selected: constant data of threshold voltages U1 = 0 p.u., U2 = 1.5 p.u. and constant values of boundary times: T1 = T2 = T3 = T4 = 0.25 s.

**Claims**

1. A method for controlling the ignition of electric arc in the intercontact break of a disconnector used in a gas-insulated switchgear during opening/closing the disconnector, including the supply of pulses of electromagnetic radiation energy for triggering additional ignitions of electric arc, using means for generating an electromagnetic radiation adapted to supply electromagnetic radiation energy pulses to the intercontact break of the disconnector, which is connected with an optical system, located outside and inside the disconnector, where in the method the time (t) of the opening/closing operation of the disconnector is measured, **characterized in that**:

a) during the operation of opening the disconnector:

• the voltage waveform uS(t) on the incoming side of the disconnector is measured,
• instantaneous voltage values uS(t) on the incoming side of the disconnector are compared with a preset threshold constant value (U1) and if the condition is fulfilled first time that the instantaneous value of voltage uS(t) is equal to the threshold constant value (U1), the first additional energy pulse is supplied to the intercontact break, and then if the condition is fulfilled that the instantaneous value of voltage uS(t) is equal to the threshold constant value (U1), then next subsequent energy pulses are supplied, which continue to be supplied until the real time (t) of the operation of opening the disconnector becomes equal or exceeds a boundary time value preset by the user (T1), for which value the distance between the contacts reaches a value for which further spontaneous ignitions are not possible for the given design of disconnector,

or

• voltage waveforms uS(t) on the incoming side of the disconnector as well as voltage waveforms uL(t) on the load side of the disconnector are measured,
• a instantaneous value of voltage A(t) is calculated and compared with a preset boundary constant value (U2), and if the instantaneous value of voltage A(t) reaches a value equal to or bigger than the threshold constant value (U2), the first additional energy pulse is supplied to the intercontact break, and then if the instantaneous value of voltage A(t) reaches a value equal to or bigger than the threshold constant value (U2) next subsequent energy pulses are supplied, which continue to be supplied until the real time (t) of the operation of opening the disconnector becomes equal to or exceeds a boundary time value preset by the user (T3), for which the distance between the contacts reaches a value for which further spontaneous ignitions are not possible for the given disconnector design,

b) during the operation of closing the disconnector:

• the voltage waveform uS(t) on the incoming side of the disconnector are measured,
• the instantaneous value of voltage uS(t) on the incoming side of the disconnector is compared with a preset threshold constant value (U1) and if the conditions are fulfilled that the instantaneous value of voltage uS(t) is equal to the threshold constant value (U1) and that the real time of closing the disconnector is equal to or bigger a boundary time value preset by the user (T2), the first additional energy pulse is supplied to the intercontact break, and then if the conditions are fulfilled that the instantaneous value of voltage uS(t) is equal to the threshold constant value (U1) and that the real time of closing the disconnector is equal to or bigger a boundary time value preset by the user (T2), next subsequent energy pulses are supplied, and they are supplied until the disconnector closes completely
or
• voltage waveforms uS(t) on the incoming side of the disconnector and voltage waveforms uL(t) on the load side of the disconnector are measured,
• the instantaneous value of voltage A(t) is calculated and compared with a preset boundary constant value (U2), and if the instantaneous value of voltage A(t) reaches a value equal to or bigger than the threshold constant value (U2) and the real time of closing the disconnector is equal to the time boundary value preset by the user (T4), the first additional energy pulse is supplied to the intercontact break, and then if the instantaneous value of voltage A(t) reaches a value equal to or bigger than the threshold constant value (U2) and the real time of closing the disconnector is equal to or bigger the time boundary value (T4) preset by the user, next subsequent energy pulses are supplied, and they are supplied until the disconnector closes completely.

2. A method according to claim 1 **characterized in that** the instantaneous value of voltage A(t) is calculated from this formula:

$$A(t) = |uS(t) - uL(t)| + |uS(t)|,$$

where:

uS(t) is the instantaneous value of voltage waveform measured on the incoming side of the disconnector,
uL(t) is the instantaneous value of voltage waveform measured on the load side of the disconnector.

3. A method according to claim 1 **characterized in that** the instantaneous value of voltage A(t) is calculated from this formula:

$$A(t) = |uS(t) - uL(t)|,$$

where:

uS(t) is the instantaneous value of voltage waveform measured on the incoming side of the disconnector,
uL(t) is the instantaneous value of voltage waveform measured on the load side of the disconnector.

4. A device for controlling electric arc ignition in the intercontact break of a disconnector used in gas-insulated switchgear, during opening/closing the disconnector, comprising an energy source (12) adapted to supplying electromagnetic radiation energy pulses to the intercontact break of the disconnector, which is connected with an optical system (13), located outside and inside the disconnector, whereby the energy source (12) is electrically connected with a control system (8) **characterized in that** the control system is a computer device whose processor contains a measuring module (9), electrically connected with a sensor (5) measuring the voltage waveform on the incoming side of the disconnector and with a sensor (6) measuring the voltage waveform on the load side, a module (10) for processing and storing the measured signals, a module (11) adapted to generating and transferring trigger signals transferred to the source of energy supply (12) and the control system (8) is configured to perform the method of claims 1 to 3.

5. A device according to claim 4, **characterized in that** the source of electromagnetic radiation energy is adapted to supplying a laser beam to the intercontact break (15).

6. A device according to claim 4, **characterized in that** the source of electromagnetic radiation energy is adapted to supplying a microwave radiation energy pulse to the intercontact break (15).

**Patentansprüche**

1. Ein Verfahren zum Steuern der Lichtbogenzündung zwischen den Kontakten eines Trenners während dem Öffnen und Schließen des Trenners, benutzt in einem gasisolierten Schalter SF6 vom Typ GIS während dem Öffnen und Schließen des Trenners, das die Zuführung von Impulsen elektromagnetischer Strahlungsenergie zur Auslösung zusätzlicher Zündungen von Lichtbögen einschließt und Einrichtungen zur Erzeugung einer Energiequelle besitzt, die angewendet wird, um die Impulse der elektromagnetischen Strahlungsenergie an die Kontakte des Trenners heranzuführen, welcher mit einem optischen System verbunden ist, das außerhalb und innerhalb des Trenners angeordnet ist, wo bei diesem Verfahren die Zeit (t) des Vorgangs des Öffnens/Schließens des Trenners gemessen wird, **dadurch gekennzeichnet dass**:

a) während des Vorgangs des Öffnens des Trenners:

• der Verlauf der Spannung uS(t) auf der Eingangsseite des Trenners gemessen wird,
• die momentanen Spannungswerte uS(t) auf der Eingangsseite des Trenners mit einem voreingestellten konstanten Schwellenwert (U1) verglichen werden und, wenn die Bedingung zum ersten Mal erfüllt ist, dass der momentane Spannungswert uS(t) gleich dem voreingestellten konstanten Schwellenwert (U1) ist, der erste zusätzliche Energie-Impuls dem Trenner zugeführt wird, und dann, wenn die Bedingung erfüllt ist, dass der momentane Spannungswert uS(t) gleich dem voreingestellten konstanten Schwellenwert (U1) ist, dann ein weiterer zusätzlicher Energie-Impuls dem Trenner zugeführt wird, der so lange weiter zugeführt wird, bis die reelle Zeit (t) des Vorgangs des Öffnens des Trenners gleich oder größer einem vom Nutzer voreingestellten zeitlichen Grenzwert (T1) wird, für welchen Wert der Abstand zwischen den Kontakten eine Größe erreicht, für die weitere spontane Lichtbögen, für die gegebene Bauart des Trenners, nicht mehr möglich sind,

oder

• sowohl der Verlauf der Spannung uS(t) auf der Eingangsseite des Trenners als auch der Verlauf der Spannung uL(t) auf der Lastseite des Trenners gemessen werden,
• ein momentaner Spannungswert A(t) errechnet wird und dieser mit einem voreingestellten konstanten Schwellenwert (U2) verglichen wird und, wenn der momentane Spannungswert A(t) einen Wert gleich oder größer dem konstanten Schwellenwert (U2) erreicht, der erste zusätzliche Energie-Impuls dem Trenner zugeführt wird, und dann, wenn der momentane Spannungswert A(t) gleich oder größer dem voreingestellten konstanten Schwellenwert (U2) ist, weitere zusätzliche Energie-Impulse dem Trenner zugeführt werden, die so lange weiter zugeführt werden, bis die reelle Zeit (t) des Vorgangs des Öffnens des Trenners gleich oder größer einem vom Nutzer voreingestellten zeitlichen Grenzwert (T3) wird, für welchen Wert der Abstand zwischen den Kontakten eine Größe erreicht, für die weitere spontane Lichtbögen, bedingt durch die Bauart des Trenners, nicht mehr möglich sind,

b) während des Vorgangs des Schließens des Trenners:

• der Verlauf der Spannung uS(t) auf der Eingangsseite des Trenners gemessen wird,
• die momentanen Spannungswerte uS(t) auf der Eingangsseite des Trenners mit einem voreingestellten konstanten Schwellenwert (U1) verglichen werden und, wenn die Bedingungen erfüllt sind, dass der momentane Spannungswert uS(t) gleich oder größer dem voreingestellten konstanten Schwellenwert (U1) ist und die reelle Zeit des Schließens des Trenners gleich oder größer der vom Benutzer voreingestellten Zeit (T2) ist, der erste zusätzliche Energie-Impuls dem Trenner zugeführt wird, und dann, wenn die Bedingungen erfüllt sind, dass der momentane Spannungswert uS(t) gleich dem voreingestellten konstanten Schwellenwert (U1) ist und die reelle Zeit des Schließens des Trenners gleich oder größer der vom Benutzer voreingestellten Zeit (T2) ist, weitere zusätzliche Energie-Impulse zugeführt werden, und zwar so lange, bis der Trenner vollkommen geschlossen ist.

oder

• sowohl der Verlauf der Spannung uS(t) auf der Eingangsseite des Trenners als auch der Verlauf der Spannung uL(t) auf der Lastseite des Trenners gemessen werden,
• ein momentaner Spannungswert A(t) errechnet wird und dieser mit einem voreingestellten konstanten Schwellenwert (U2) verglichen wird und, wenn der momentane Spannungswert A(t) einen Wert gleich oder größer dem voreingestellten konstanten Schwellenwert (U2) erreicht und die reelle Zeit des Schließens des Trenners gleich dem Grenzwert Nutzer voreingestellten zeitlichen Grenzwert (T4) ist, der erste zusätzliche Energie-Impuls dem Trenner zugeführt wird, und dann, wenn der momentane Spannungswert A(t) einen Wert gleich oder größer dem vom Nutzer voreingestellten konstanten Schwellenwert (U2) erreicht und die reelle Zeit des Schließens des Trenners gleich oder größer dem vom Nutzer voreingestellten zeitlichen Grenzwert (T4) ist, weitere zusätzliche Energie-Impulse zugeführt werden, und zwar so lange, bis der Trenner vollkommen geschlossen ist.

**2.** ein Verfahren gemäß Anspruch 1, **dadurch gekennzeichnet, dass** der momentane Wert der Spannung A(t) nach folgender Formel berechnet wird:

$$A(t) = |uS(t) - uL(t)| + |uS(t)|,$$

wobei:

uS(t) der momentane Wert des Spannungsverlaufs ist, der auf der Eingangsseite des Trenners gemessen wird,
uL(t) der momentane Wert des Spannungsverlaufs ist, der auf der Lastseite des Trenners gemessen wird.

**3.** ein Verfahren gemäß Anspruch 1, **dadurch gekennzeichnet, dass** der momentane Wert der Spannung A(t) nach folgender Formel berechnet wird:

$$A(t) = |uS(t) - uL(t)|,$$

wobei:

uS(t) der momentane Wert des Spannungsverlaufs ist, der auf der Eingangsseite des Trenners gemessen wird,
uL(t) der momentane Wert des Spannungsverlaufs ist, der auf der Lastseite des Trenners gemessen wird.

**4.** Eine Einrichtung zum Steuern der Lichtbogenzündung zwischen den Kontakten eines Trenners während dem Öffnen und Schließen des Trenners, benutzt in einem Gas-isolierten Schalter SF6 vom Typ GIS während dem Öffnen und Schließen des Trenners, bestehend aus einer Energiequelle (12) für die Zuführung von Impulsen elektromagnetischer Strahlungsenergie zu den Kontakten des Trenners, der mit einem optischen System (13) verbunden ist, das außerhalb und innerhalb des Trenners angeordnet ist, wobei die Energiequelle (12) mit dem Steuerungssystem (8) elektrisch verbunden ist, **dadurch gekennzeichnet, dass** das Steuerungssystem ein Computergerät ist, dessen Prozessor ein Messmodul (9) enthält, das elektrisch mit einem Sensor (5) verbunden ist, der den Spannungsverlauf auf der Eingangsseite des Trenners misst, und mit einem Sensor (6), der den Spannungsverlauf auf der Lastseite misst, ferner mit einem Modul (10) für die Bearbeitung und Speicherung der gemessenen Signale, einem Modul (11) für die Erzeugung und Übertragung der Auslösesignale, die zur Quelle der Energieversorgung (12) übertragen werden, wobei das Steuerungssystem (8) entsprechend konfiguriert ist, um das Verfahren gemäß den Ansprüchen 1-3 auszuführen.

**5.** Eine Einrichtung gemäß Anspruch 4, **dadurch gekennzeichnet, dass** die Quelle der elektromagnetischen Strahlungsenergie daran angepasst ist, einen Laserstrahl zu den Kontakten des Trenners (15) zuzuführen.

**6.** Eine Einrichtung gemäß Anspruch 4, **dadurch gekennzeichnet, dass** die Quelle der elektromagnetischen Strahlungsenergie daran angepasst ist, einen Mikrowellen-Strahlungsimpuls zu den Kontakten des Trenners (15) zuzuführen.

## Revendications

**1.** Procédé de commande d'allumage de l'arc dans la zone inter-contact d'un sectionneur pendant l'opération d'ouverture et de fermeture du sectionneur utilisé dans l'appareillage à isolation sous gaz SF6 de type GIS durant ouverture / fermeture du sectionneur, comportant la fourniture des impulsions de l'énergie du rayonnement électromagnétique pour déclencher des allumages additionnels de l'arc électrique, utilisant des dispositifs de génération du rayonnement électromagnétique adaptés à fournir des impulsions de l'énergie du rayonnement électromagnétique dans la zone inter-contact du sélectionneur qui est connecté par l'intermédiaire d'un système optique situé à l'extérieur et à l'intérieur du sectionneur, étant entendu que, dans ce procédé, le temps (t) de l'opération d'ouverture et de fermeture du sectionneur est mesuré, **caractérisé en ce que** :

a) pendant l'opération d'ouverture du sectionneur :

• le déroulement du voltage uS(t) du côté de l'alimentation du sectionneur est mesuré,
• la valeur momentanée du voltage uS(t) du côté de l'alimentation du sectionneur est comparée à la valeur constante préalablement consignée (U1), et si, pour la première fois, est satisfaite la condition que la valeur momentanée du voltage uS(t) soit égale à la valeur constante préalablement consignée (U1), alors la première impulsion de l'énergie additionnelle est dirigée vers la zone inter-contact du sectionneur et dans ce cas, si la fois suivante la condition que la valeur momentanée du voltage uS(t) soit égale à la valeur constante préalablement consignée (U1) est satisfaite, alors l'impulsion suivante de l'énergie est fournie et cela va continuer jusqu'à ce que le temps réel (t) de l'opération d'ouverture du sectionneur devienne égal ou supérieur à la valeur limite du temps préalablement consigné par l'utilisateur (T1) pour lequel la valeur de la distance entre les contacts atteint la valeur pour laquelle les allumages spontanés successifs sont impossibles eu égard la construction concernée du sectionneur,

ou

• sont mesurés le déroulement du voltage uS(t) autant du côté de l'alimentation du sectionneur que le déroulement du voltage uL(t) du côté du chargement du sectionneur,
• la valeur momentanée du voltage A(t) est calculée et comparée à la valeur limite constante préalablement consignée (U2), et si la valeur momentanée du voltage A(t) atteint la valeur égale ou supérieure à la valeur constante préalablement consignée (U2), alors la première impulsion de l'énergie additionnelle est dirigée vers la zone inter-contact du sectionneur et dans le cas où la valeur momentanée du voltage A(t) atteint la valeur égale ou supérieure à la valeur constante préalablement consignée (U2), alors les impulsions successives suivantes de l'énergie sont fournies et elles seront fournies jusqu'à ce que le temps réel (t) de l'opération d'ouverture du sectionneur devienne égal ou supérieur à la valeur limite du temps préalablement consigné par l'utilisateur (T3) pour laquelle la distance entre les contacts atteint la valeur pour laquelle les allumages spontanés successifs sont impossibles eu égard la construction concerné du sectionneur,

b) pendant l'opération de fermeture du sectionneur :

• le déroulement du voltage uS(t) du côté de l'alimentation du sectionneur est mesuré,
• la valeur momentanée du voltage uS(t) du côté de l'alimentation du sectionneur est comparée à la valeur constante préalablement consignée (U1), et si sont satisfaites les conditions que la valeur momentanée du voltage uS(t) soit égale ou supérieure à la valeur constante préalablement consignée (U1) et que le temps réel (t) de l'opération de fermeture du sectionneur soit égal ou supérieur à la valeur du temps limite consignée par l'utilisateur (t2), alors la première impulsion de l'énergie additionnelle est dirigée vers la zone inter-contact du sectionneur et dans ce cas, si sont satisfaites les conditions que la valeur momentanée du voltage uS(t) soit égale à la valeur constante préalablement consignée (U1) et que le temps réel (t) de l'opération de fermeture du sectionneur soit égal ou supérieur à la valeur du temps limite consignée par l'utilisateur (t2), alors les impulsions successives suivantes de l'énergie sont fournies et elles seront fournies jusqu'à ce que le sectionneur soit totalement fermé,

ou

• sont mesurés le déroulement du voltage uS(t) du côté de l'alimentation du sectionneur ainsi que le déroulement du voltage uL(t) du côté du chargement du sectionneur,
• la valeur momentanée du voltage A(t) est calculée et comparée à la valeur limite constante préalablement consignée (U2), et si la valeur momentanée du voltage A(t) atteint la valeur égale ou supérieure à la valeur constante préalablement consignée (U2) et le temps réel de l'opération de fermeture du sectionneur est égal à la valeur limite du temps préalablement consigné par l'utilisateur (T4), alors la première impulsion de l'énergie additionnelle est dirigée vers la zone inter-contact du sectionneur et dans ce cas, si la valeur momentanée du voltage A(t) atteint la valeur égale ou supérieure à la valeur constante préalablement consignée (U2) et le temps réel de l'opération de fermeture du sectionneur est égal à la valeur limite du temps (T4) préalablement consigné par l'utilisateur, alors les impulsions successives suivantes de l'énergie sont fournies et elles seront fournies jusqu'à ce que le sectionneur soit totalement fermé.

2. Procédé selon la revendication 1, **caractérisé en ce que** la valeur momentanée du voltage A(t) est calculée selon la formule :

$$A(t) = \mid uS(t) - uL(t) \mid + uS(t) \mid ,$$

où :

uS(t) est une valeur momentanée du déroulement du voltage mesuré du côté de l'alimentation du sectionneur,
uL(t) est une valeur momentanée du déroulement du voltage mesuré du côté du chargement du sectionneur

3. Procédé selon la revendication 1, **caractérisé en ce que** la valeur momentanée du voltage A(t) est calculée selon la formule :

$$A(t) = \mid uS(t) - uL(t) \mid ,$$

où :

uS(t) est une valeur momentanée du déroulement du voltage mesuré du côté de l'alimentation du sectionneur,
uL(t) est une valeur momentanée du déroulement du voltage mesuré du côté du chargement du sectionneur.

4. Dispositif de commande d'allumage de l'arc pendant l'opération d'ouverture et de fermeture du sectionneur comprenant une source d'énergie (12) adaptée à fournir des impulsions de l'énergie du rayonnement électromagnétique dans la zone inter-contact du séctionneur, qui est connecté au système optique (13) situé à l'extérieur et à l'intérieur du sectionneur, où la source d'énergie (12) est connectée électriquement au système de commande (8), **caractérisé en ce que** le système de commande est un ordinateur qui comporte un module de mesure (9) connecté électriquement au détecteur (5) mesurant le déroulement du voltage du côté de l'alimentation du sectionneur et au détecteur (6) mesurant le déroulement du voltage du côté du chargement du sectionneur, un module (10) de traitement et de magasinage des signaux mesurés, un module (11) adapté à générer et transférer des signaux déclencheurs transmis à la source d'énergie (12) et au système de commande (8), est configuré de façon permettant de réaliser le procédé selon les revendications 1 - 3.

5. Procédé selon la revendication 4, **caractérisé en ce que** la source d'énergie du rayonnement électromagnétique est adaptée à fournir le rayon laser au sectionneur (15).

6. Procédé selon la revendication 4, **caractérisé en ce que** la source d'énergie du rayonnement électromagnétique est adaptée à fournir des impulsions de rayonnement micro-onde dans la zone inter-contact du sectionneur (15).

Fig. 1

```
┌─────────────────────────┐          ┌─────────────────────────┐
│           S11           │ ◄─────── │       U1, T1, T2        │
└─────────────────────────┘          └─────────────────────────┘
             │
             ▼
┌─────────────────────────┐
│           S12           │
└─────────────────────────┘
             │
             ▼
┌─────────────────────────┐
│           S13           │
└─────────────────────────┘
             │
             ▼
┌─────────────────────────┐
│           S14           │
└─────────────────────────┘
             │
             ▼
┌─────────────────────────┐
│           S15           │
└─────────────────────────┘
```

Fig. 2

```
┌─────────────────────────┐          ┌─────────────────────────┐
│           S21           │ ◄─────── │       U2, T3, T4        │
└─────────────────────────┘          └─────────────────────────┘
             │
             ▼
┌─────────────────────────┐
│           S22           │
└─────────────────────────┘
             │
             ▼
┌─────────────────────────┐
│           S23           │
└─────────────────────────┘
             │
             ▼
┌─────────────────────────┐
│           S24           │
└─────────────────────────┘
             │
             ▼
┌─────────────────────────┐
│           S25           │
└─────────────────────────┘
```

Fig. 3

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6342618 B
- CN 1258923
- DE 3216275
- EP 09156418 A
- JP 2000067705 B
- WO 9967857 A